Europäisches Patentamt

European Patent Office

Office européen des brevets

(19)

(11) Publication number: **0 250 080 B1**

(12) **EUROPEAN PATENT SPECIFICATION**

(45) Date of publication of patent specification: **15.04.92**   (51) Int. Cl.[5]: **B29C 45/17**

(21) Application number: **87304002.6**

(22) Date of filing: **05.05.87**

(54) Method for injection molding.

(30) Priority: **19.05.86 US 864892**
     **16.10.86 US 919670**

(43) Date of publication of application:
**23.12.87 Bulletin 87/52**

(45) Publication of the grant of the patent:
**15.04.92 Bulletin 92/16**

(84) Designated Contracting States:
**AT BE CH DE ES FR GB GR IT LI LU NL SE**

(56) References cited:
**EP-A- 0 127 961**
**DE-A- 2 716 817**
**FR-A- 2 256 021**

**PATENT ABSTRACTS OF JAPAN, vol. 3, no. 147 (C-66), 5th December 1979, page 3 C 66; & JP-A-54 123 173 (ASAHI DOW K.K.) 25-09-1979**

**KUNSTSTOFFE, vol. 71, no. 7, July 1981, pages 420-424, Munich, DE; R. MERIDIES: "Verfahren zum Herstellen von Sandwich-Spritzgussteilen mit einem Gas als Kern-komponente"**

**MACHINE DESIGN, vol. 55, no. 10, May 1983,**

page 44, Cleveland, Ohio, US: "Scanning the field for ideas"

(73) Proprietor: **Ladney, Michael**
**6600 East Fifteen Mile Road**
**Sterling Heights, Michigan 48077(US)**

(72) Inventor: **Baxi, Indra R.**
**5858 Liberty Road**
**Solon, Ohio 44139(US)**

(74) Representative: **Rehders, Jochen, Dipl.-Ing.**
**Stresemannstrasse 28**
**W-4000 Düsseldorf 1(DE)**

## Description

This invention generally pertains to injection molding. More specifically, the present invention relates to a process for injection molding under a high pressure, according to the preamble of claim 1.

The invention is particularly applicable to the injection of a gas under high pressure into a molten plastics stream as it enters a mold sprue and a mold space. However, it will be appreciated by those skilled in the art that the invention has broader applications and may also be adapted for use in many other injection molding environments.

It has become known that it is advantageous to urge the molten plastics material in an injection mold outwardly into contact with the mold surfaces by exerting pressure on the molten plastic. This aids the external surface of the plastics material in assuming the precise shape dictated by the mold surfaces. The pressure also assists the filling of the mold space with molten plastics even if the space is elongated or narrow and is normally difficult to fill. Such pressure can be applied by a fluid which is injected into the plastics material in the mold space. This is advantageous since the molded part produced utilizes less plastics material and is lighter than if the part were solid plastics.

Heretofore, conventional injection molding apparatus have attempted to simultaneously inject a pressurized fluid and a molten plastics material into a mold cavity. Difficulties have, however, been experienced when the plastics needs to be injected at a high pressure since then a high pressure fluid (preferably gas at $2 \cdot 794 \times 10^7$ $Nm^{-2}$ to $1 \cdot 047 \times 10^8$ $Nm^{-2}$ (4,000 to 15,000 psi)) is also required. Conventional injection molding apparatuses utilize pump arrangements, such as a piston and cylinder pump, for pressurizing the gas when its injection into the molten stream of plastics material is called for. Unfortunately, the response time of a conventional piston and cylinder arrangement for pressurizing the gas to a suitably high pressure is approximately two to three seconds. Usually, however, the injection molding process itself is completed in these two to three seconds so that by the time the piston and cylinder arrangement has pressurized the gas to an adequate pressure to enter the mold space (for example, $6.287 \times 10^7$ $Nm^{-2}$[9,000 psi]) the injection molding of the molten plastics is completed. At this point, the gas will explode into the mold space and pressurize the plastics part that has been molded and move toward the surfaces of the mold cavity whatever molten plastics remains therein.

It should be noted that gas at high pressure, in the range of generally $2.794 \times 10^7$ $Nm^{-2}$ to $1.047 \times 10^8$ $Nm^{-2}$ (4,000 to 15,000 psi), is unavailable from pressurized cylinders or the like that are commercially available. Although it is true that a $4.191 \times 10^7$ $Nm^{-2}$ (6,000 psi) gas cylinder has now become available in certain areas, generally only gas cylinders pressurized at $1.746 \times 10^7$ $Nm^{-2}$ (2,500 psi) are available. Thus gas from a conventional supply source needs to be pressurized before it can be utilized in an injection molding process. If such pressurization is not done before the injection molding process begins, the gas will generally only be adequately pressurized to its injection pressure after the molten plastics has already been injected.

To take one example, if a mold space is 90% full of molten and partially solidified plastics, and if there are a lot of bosses, ridges and ribs in the part to be molded then, before the pressurized gas enters the mold cavity, there will be numerous bad sink marks in the molded product. When the pressurized gas is injected after the injection of the molten plastics, the gas will urge the plastic outwardly and push the sink marks out against the surfaces of the mold space. This, however, causes shadow marks on the plastic product. Such shadow marks are very evident and are unacceptable for a class A finish. Moreover, gas entering the mold space after the plastics material has essentially stopped flowing will push the plastic more strongly in its thinner zones than in its thicker zones, as would be expected. In other words, the gas will drive the plastics somewhat sideways as well as outwardly. Additionally, the extremities of a plastics product will still get sink marks.

If, on the other hand, the product is not full of ribs, ridges, and bosses, then, when the plastics originally stops flowing, there will be a nonfilled area in the mold space. When the gas enters the mold space, it will push whatever molten plastics remains into the nonfilled area so that the plastics will coat all the surfaces of the mold space. However, a clear line of demarcation will be evident on the surface of the product to show where the gas has compelled the plastic to flow again after it had initially stopped. This, again, is unacceptable for a class A finish. In both of the above instances post molding treatment, such as painting, is called for and this, obviously, adds to the expense of the molded part.

EP-A-0127961 discloses a process for producing an injected molded product, comprising: storing a quantity of gas in a storage chamber at a first pressure; introducing a stream of plastic material, at a second pressure, into the mould space, said first pressure being at least as high as said second pressure; introducing the gas into the molten stream of plastic material thereby forming a gas cavity in the molten material, wherein the gas exerts a pressure on the surrounding plastics material to urge the material towards a surface of the mould space; continuing to introduce both gas and the molten material into said mould space; terminating the supply of gas and the supply of molten plastic material; and solidifying the molten plastic material in the mould space to form the product. However, in this process the rams responsible for injecting plastics material and supplying pressurized gas remain in their fully pressurising configuration throughout the cooling of the moulded article.

JP-A-54123173 discloses a method of monitoring a moulding process for hollowed or foam shapes wherein the pressure locus of a pressurising gas is compared with a standard pressure locus.

FR-A-2256021 discloses a method for moulding a hollow-shaped article which comprises injecting into a mould cavity a molten synthetic resin in an amount not enough to fill the mould cavity and subsequently introducing a mass of gas under pressure through the same entrance into the mould cavity, either independently or in conjunction with the molten resin until the mould cavity is filled to capacity. The mass of gas is stored in a gas compression cylinder disposed separately and is introduced under pressure when a high pressure ram is advanced inside the cylinder.

DE-A-2716817 discloses a mould assembly for plastics injection moulding using pressurized fluid assistance. The mould assembly includes a needle valve and a runner. The needle valve is slidable between closed and open positions. The valve also includes an internal fluid passage for introduction of pressurized fluid into the mould cavity.

Accordingly, it has been considered desirable to develop a new and improved method for injection moulding and an apparatus therefor and mouldings produced thereby which would overcome the foregoing difficulties and others while providing better and more advantageous overall results.

According to the invention there is provided a process for producing an injected moulded product, comprising: storing a quantity of gas in a storage chamber at a first pressure; introducing a stream of plastics material, at a second pressure, into the mould space, said first pressure being at least as high as said second pressure; introducing the gas into the molten stream of plastics material thereby forming a gas cavity in the molten material, wherein the gas exerts a pressure on the surrounding plastics material to urge the material towards a surface of the mould space; continuing to introduce both gas and the molten material into said mould space; terminating the supply of gas and the supply of molten plastic material; and solidifying the molten plastics material in the mould space to form the product, characterized in that the method includes the steps of: reducing the gas pressure from the second pressure to a third pressure which is lower than the first and second pressures; and maintaining the third pressure within said cavity during cooling.

In accordance with a preferred feature of the invention, the gas is introduced at a mould sprue.

Preferbly, the pressurized gas is introduced into the molten stream of plastic material after the mould space is more than half occupied with molten plastic.

In accordance with another preferred feature of the invention, the gas is introduced at a pressure approximately between $2.758 \times 10^7$ $Nm^{-2}$ and $1.034 \times 10^8$ $Nm^{-2}$ (4,000 psi and 15,000 psi). Preferably, the gas is an inert gas such as nitrogen.

It is preferable that the gas in said storage chamber is maintained at said first pressure when gas at said first pressure is introduced into the molten stream of plastic material, by means of introducing additional gas at said first pressure into the storage chamber.

Preferably the process further comprises the step of replenishing the gas in the storage chamber. The step of replenishing may comprise the subsidiary steps of introducing the gas at a low pressure into a pump and increasing the pressure of the gas by means of the pump until the pressure equals the first pressure. The gas is then introduced at the first pressure into the storage chamber.

In accordance with another preferred feature of the invention, the quantity of gas that is introduced into the mould space is not directly measured but only the pressure of the gas is controlled.

An apparatus is disclosed herein for producing an injection moulded product made of plastics material by a process according to the invention.

Such apparatus comprises a gas supply source together with a gas pressurization means for pressurizing gas to a first pressure. A means is provided for introducing a molten plastics matrial into a mould space at a second pressure. The first pressure is at least as great as the second pressure. A storage chamber is provided for storing gas at the first pressure so that the gas is immediately available for use. Means are provided for initiating gas flow from the storage chamber at the first pressure immediately after the molten plastics has passed the position at which the gas is introduced. A means is provided for maintaining a pressure on the molten plastics material against the surfaces of the mould space as the plastics cools and until it can sustain the form dictated by the mould.

The preferred apparatus disclosed further comprises a means for continuously feeding gas at the first pressure into the mould space as long as the molten plastics is fed into the mould space.

There is also disclosed herein an injection moulded part which is formed by the process recited above.

One advantage of the disclosed embodiments of the present invention is the provision of a new injection moulding method which introduces a gas into a molten stream of plastics material while the stream is still flowing.

Another advantage of the disclosed embodiments is the provision of a process in which the gas is introduced into the molten stream of plastics material immediately after the stream has passed the position at which the gas is introduced to form the gas cavity in the molten material as quickly as possible.

Still another advantage of the discloseed embodiments is the provision of a process and apparatus in which the gas is continuously fed or injected into the mold space as long as the molten stream of plastics material is introduced into the mold space, thus ensuring that the plastics and gas are uniformly injected into the mold space and that a gas injection channel of a substantially constant diameter is formed in the injection molded part. This ensures that the gas will act to urge the molten plastics to contact all the mold space surfaces with approximately the same amount of force.

Yet another advantage of the disclosed embodiments is the provision of an injection molding process and apparatus which can be used to mold parts from hard plastics, such as acrylics, polycarbonates and rigid PVC which may need to be injection molded at pressures of around $6.205 \times 10^7$ $Nm^{-2}$ to $1.034 \times 10^8$ $Nm^{-2}$ (9,000 to 15,000 psi).

Another advantage of the disclosed embodiments is the provision of an apparatus which enables pressurized gas to be instantaneously available for an injection molding process.

A further advantage of the disclosed embodiments is the provision of an apparatus in which the amount of gas flowing into a gas cavity does not need to be measured. In other words, the apparatus and process disclosed are more forgiving and not as difficult to run as conventional processes since it makes no difference in the process whether the volume of gas that is injected into the mold space is somewhat larger or smaller than what was otherwise desired.

Still other benefits and advantages of the embodiments disclosed herein will become apparent to those skilled in the art upon a reading and understanding of the following detailed specification.

The invention will now be described by way of example, reference being made to the accompanying drawings, in which:-

FIGURE 1 is a side elevational view in cross section of a mold and a screw ram of an injection molding press incorporating the apparatus for pressurizing gas according to one embodiment of the present invention, the apparatus being shown in schematic form; and,

FIGURE 2 is a schematic illustration of an alternative apparatus for pressurizing gas that is usable with the mould of Figure 1.

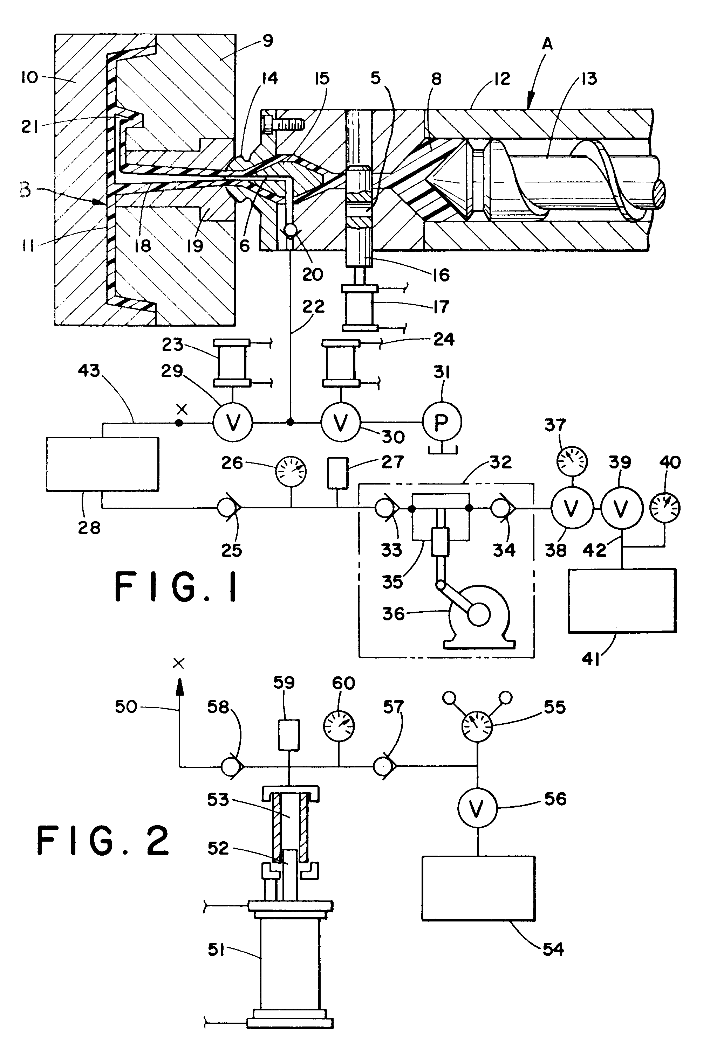

Referring now to the drawings, wherein the showings are for purposes of illustrating preferred and alternate embodiments of the invention only and not for purposes of limiting same, FIGURE 1 shows the subject new gas supply system for an injection molding apparatus A. While the system is primarily designed for and will hereinafter be described in connection with injecting a gas at a mold space sprue, it will be appreciated that the overall inventive concept involved could be adapted to fluids injected at other points in the mold space as well.

An apparatus A is provided which injects molten plastics under pressure into a mold space 11. Under high pressure, a gas is introduced to push, but not pack, the molten plastics into the mold space 11. The resultant molded part has a smooth outer surface with a minimal amount of sink marks such that the outer surface is acceptable as a class A finish. An injection molding press has a pair of cooperating mold parts 9 and 10 which define the mold space 11. Also, a housing 12 contains a hydraulic screw ram 13 for injecting a molten plastic 8 into the mold space 11. The screw ram has a nozzle 14 and a feed chamber 15. The heated and molten plastics material enters a sprue 18 from the nozzle 14 in the feed chamber 16 and flows into the mold space 11.

FIGURE 1 also shows the pressurized gas supply system that is used to inject gas into the molten plastics at the mouth of the mold sprue 18 in a mold sprue bushing 19. The gas supply system incorporates a gas supply tank 41, a high pressure gas pump assembly 32 and a high pressure gas storage tank 28. A control valve 29 is a high pressure gas directional valve to nozzle 14 and connects the nozzle to the gas storage tank 28 through a gas line 22. A check valve 25 between the chamber 28 and a gas pump assembly 32 prevents gas from flowing back to the pump assembly.

Prior to the start of a molding cycle, inert gas, such as nitrogen or the like, is stored in the high pressure gas storage tank 28. This is accomplished by activating a gas compressor pump 35 of the gas pump assembly 32. The pump 35 draws gas from a gas supply cylinder 41 through a gas passageway 42 to a suction side of the pump. A pressure gauge 37 and a pressure reducing valve 38 together with a control valve 39 provide control of gas pressure entering the suction passageway 42 of the pump 35.

Gas is then pumped into tank 28 through the check valve 25 until the pressure setting on a pressure switch 27 is activated by reaching a predetermined gas pressure. This pressure is preferably in the range of $2.758 \times 10^7$ Nm$^{-2}$ to $1.034 \times 10^8$ Nm$^{-2}$ (4,000 to 15,000 psi) and is indicated on a pressure gauge 26. At the desired pressure setting, the pump 35 is shut off by means of pressure switch 27. The gas pressure setting on pressure switch 27 is dependent upon the type of plastic that will be injection molded. For example, with soft plastics, such as polyethylene, a lower pressure setting is all that is required. On the other hand, for viscous plastics, such as acrylic, polycarbonate, rigid PVC or acrylonitrile and the like, a higher pressure setting is necessary on the pressure switch 27 since these plastics are injected at a higher pressure into the mold space 11. The pressure needs to be adjusted for each type of plastics, i.e., a higher setting for acrylonitrile and a lower setting for polyethylene. If the pressure switch is set too high for a product such as polyethylene then the gas at this high pressure will blow clear out of the plastic rather than producing a gas bubble within the plastic.

At the instant that the pump 35 is shut off, the check valve 25 closes thereby holding high pressure gas between the two-way gas valve 29 and the check valve 25. The valve 29 is preferably a two-way directional air valve in which an air cylinder 23 is activated to open and close the valve 29.

When the high pressure gas storage tank 28 is fully charged at the desired pressure and the solenoid controlled two-way directional air valves 29 and 30 are in the closed position, the molding cycle is ready to begin.

To initiate the molding cycle, a conventional mold press clamping unit (not shown) is closed to hold the mold halves 9 and 10 under pressure. The nozzle shut off valve 16 is then opened by hydraulic cylinder 17 by activating the valve upwardly so that an aperture 5 therein is aligned with the openings in the hydraulic ram body 12. At this point, the screw ram 13 is activated and when it moves forward it injects molten plastics material 8 into the mold space 11.

After a time delay just sufficient to permit the molten plastic to fill the sprue 18 by the forward movement of the screw ram 13, the valve 29 is opened by activating cylinder 23. Opening the valve 29 instanteously allows high pressure gas from storage area 28 to flow through gas line 22, check valve 20 and into gas inlet passage 6 located in the center of nozzle 14. The gas passage 6 extends to the outlet of the nozzle 14 to permit gas to be fed into the mouth of the sprue 18 and enter the molten plastics stream while the plastics injection molding process continues.

Again, it is noted that the plastics flows fairly readily itself and the desired amount of plastics material for the mold space is usually injected in approximately two to three seconds. Thus, it is imperative that a high pressure fluid, preferably gas, be immediately available once the molten plastics stream enters the sprue 18. As a relative matter, the gas, once it begins to flow, will flow faster than the molten plastics and thus the gas pressure pushes the molten plastic into the mold space 11 forming an internal cavity 21 within the molded part. The rate of gas flow through the gas inlet passage 6 is not controlled and will vary during the molding cycle. The pressure of the gas in the receiving chamber 28 is, however, controlled.

In other words, if the pressure in the receiving chamber 28 becomes lower than the pressure setting on the pressure switch 27, as will happen once enough gas flows through the inlet passage 6, the pump 35 will start to build gas pressure up to the required amount in the storage tank 28 and thus sustain the pressure of the gas flowing into the molding hollow section 21 from the gas inlet passage 6.

It should be noted, however, that the gas pressure in the storage tank 28 need not be recharged from ambient pressure but only the pressure drop in the gas in the storage tank 28 needs to be made up. The pump 35 is preferably of the type that can generate small amounts of highly pressurized gas quickly enough to make up for the pressure drop in the tank 28 during the injection molding cycle so as to substantially maintain the storage tank at the desired pressure. The gas is preferably continuously injected into the mold space. This is advantageous since the plastics and the gas can thus both be uniformly injected into the mold space and a gas channel of a substantially constant diameter can be formed within the molded part. This ensures that the gas will act to urge the molten plastic to contact all the mold surfaces with approximately the same amount of force.

Alternatively, if it is desired to form two or more discontinuous hollow sections in the molded part B, the flow of gas through the passageway 6 could be discontinuous or more than one gas injection point into the mold space could be provided.

During the molding cycle, the injection pressure of the molten plastics may fluctuate somewhat. However, the pressure at which the gas is injected through the passageway 6 is relatively constant, since the pump assembly 32 will keep the gas pressure in chamber 28 at substantially the setting dictated by pressure switch 27.

The process disclosed herein is more forgiving and is not as hard to run as conventional processes since the volume of the gas going into the gas cavity does not need to be measured but only the pressure needs to be controlled. For the present process it is not significant that a greater or smaller volume of gas is injected into the mold space 21 than the desired amount. Rather all that is regulated is the pressure of the gas and this is held at approximately a given level. Of course, although the volume of gas entering the mold 11 is not directly measured for each molding cycle, it may be adjusted for a particular mold cycle by adjusting the gas pressure, the plastic injection pressure and the mold design.

The pressure of gas entering the sprue 18 is at least as great as, and perferably greater than, the pressure of the molten plastics entering the sprue. For some plastics the gas pressure may range from 9,000 to 15,000 psi and gas at this high pressure needs to be stored in chamber 28 to insure that the gas is instantaneously available when needed for simultaneous injection with the molten plastics. The end of the gas flow is timed to substantially coincide with the completion of the plastics injection step. Preferably, the gas flow continues to a time just short of the screw ram 13 stopping its forward movement and thus the end of the injection of molten plastics into the mold cavity 11.

When the screw ram 13 finishes its forward movement, gas valve 29 is closed and gas valve 30 is opened allowing the gas pressure in line 22 to drop to the pressure setting on a gas pressure reducing valve 31. This pressure reducing valve 31 is set to around $698 \times 10^7$ Nm$^{-2}$(1,000 psi) thereby reducing the gas pressure in line 22 to that amount. Such pressure is held until the molten plastics in mold 11 has sufficiently cooled to be self-supporting. At such time, gas valve 31 is activated to absorb the remaining pressurized gas in line 22 and reduce the pressure in line 22 to atmospheric. At this point, the injection assembly 12 is moved away from sprue bushing 19 to permit the separation of the mold halves 9 and 10 and the removal of the mold part B.

It should be noted that when valve 29 is closed, nozzle shut off valve 16 is closed by the hydraulic cylinder 17. Screw ram 13 can then rotate to accumulate molten plastics 8 for use in the next injection cycle.

Also, during the time period that the molded part is removed, gas pump assembly 32 is activated by pressure switch 27 thereby recharging the gas storage tank 28 until the pressure therewithin reaches the desired setting as indicated on gauge 26. At this point, pressure switch 27 is shut off. The system is then ready for a repeat cycle with valves 16, 29 and 30 in the closed position.

For example, assume that the injection moulded part B is such that 4.536 kg (160 oz.) of plastics would normally have to be used to fill the mould space 11. If it is desired to save 10% of the weight of the resultant part then 0.45 kg (10 oz.) of plastics would be saved (i.e. only 4.082 kg (146 oz.) of plastic would be injected). It take approximately two cubic inches of gas to replace each 0.453 kg (ounce) of plastics and thus 524.5 cm$^3$ (32 cubic inches) of gas would be needed. The receiving chamber 28 can be sized so as to be able to provide approximately 327.8 cm$^3$ to 409.75 cm$^3$ (20 to 25 cubic inches) of pressurized gas. The pump assembly 32 will be activated to supply the remaining required gas to the chamber 28 and the mold space 11. Of course an adequate number of precharged receiving chambers could be provided so that the pump assembly would not need to be activated at all during the injection molding process.

FIGURE 2 illustrates an alternative high pressure gas source for use with the mold and screw ram assembly of FIGURE 1. The gas source of FIGURE 2 is substituted for the gas source shown in FIGURE 1 at point X. In other words, disconnect gas line 43 at point X in FIGURE 1 and connect gas line 50 of FIGURE 2 at this point.

The sequence of operation of the mold and screw ram will remain the same as above described. High pressure gas is, however, stored for injection in cylinder 53 (FIGURE 2) with valve 29 being in the closed position. The cylinder or receiving chamber 53 will continue to accumulate gas from a supply tank 54, through a pressure reducing valve 56, until the desired pressure setting, indicated on gauge 55, is reached. A hydraulically operated cylinder 51 is then activated compressing the gas in the cylinder 53 to the desired high pressure, set on pressure switch 59 and indicated on gauge 60, by movement of a piston 52. A check valve 57 prevents gas from returning to the gas supply tank 54. The stored high pressure gas is then instantaneously available for injection into the mold sprue 18 during the molding cycle sequence.

In this embodiment, no recharging of the cylinder 53 takes place during the injection molding process. Rather, a recharging of the cylinder 53 from the gas supply tank 54 takes place only in preparation for the succeeding molding cycle and after the molded part has solidified. For such recharging, the piston 52 is lowered in the cylinder 53 and gas is admitted therein. Once the cylinder is filled with gas from the supply tank 54, the charging of the cylinder 53 takes place due to movement of the piston 52 as urged by the cylinder 51.

A part molding for which the process is particularly applicable is a molding having a large surface area that is supported by thicker areas. Gas is injected into the molten plastics stream to extend the plastics along each rib or the like and thereby urge the molded plastics material against all the surfaces of the mold. Generally, the thicker portion of the molded part B contains the internal cavity 21 as shown in FIGURE 1.

**Claims**

1. A process for producing an injection moulded product, comprising: storing a quantity of gas in a storage chamber at a first pressure; introducing a stream of plastics material (8), at a second pressure, into the mould space (11), said first pressure being at least as high as said second pressure; introducing the gas into the molten stream of plastics material thereby forming a gas cavity (21) in the molten material, wherein the gas exerts a pressure on the surrounding plastics material to urge the material towards a surface of the mould space; continuing to introduce both gas and the molten material into said mould space; terminating the supply of gas and the supply of molten plastics material; and solidifying the molten plastics material in the mould space to form the product, characterized in that the method includes the steps of:
   reducing the gas pressure to a third pressure which is lower than the first and second pressures; and
   maintaining the third pressure within said cavity during cooling of the plastics material.

2. A process according to Claim 1 characterised in that the quantity of gas introduced into said mould space is not measured.

3. A process according to Claim 1 or Claim 2 characterized in that the pressure of the gas introduced into said mould space is substantially maintained at said first pressure prior to termination of the supply of gas.

4. A process according to any of Claims 1 to 3 characterized in that the pressurized gas is introduced into the molten stream of plastic material after the mould space is more than half occupied with molten plastics material.

5. A process according to any of Claims 1 to 4 characterized in that said first pressure is between $2.758 \times 10^7$ Nm$^{-2}$ and $1.034 \times 10^8$ Nm$^{-2}$ (4,000 psi and 15,000 psi).

6. A process according to any of Claims 1 to 5 characterized in that the gas in said storage chamber is maintained at said first pressure when gas at said first pressure is introduced into the molten stream of plastics material, by means of introducing additional gas at said first pressure into the storage chamber.

7. A process according to any preceding claim characterized in that the gas is introduced at a mould sprue.

8. A process according to Claim 1 or Claim 2 characterized in that the gas is nitrogen.

9. A process according to any of Claims 1 to 4, further comprising the step of storing a quantity of gas in a storage chamber (28) before the gas is introduced into the molten stream of plastics material; and replenishing the gas in said storage chamber; said step of replenishing comprising the steps of:
   introducing the gas at a pressure less than the second pressure into a pump (35);
   increasing the pressure of the gas by means of said pump until the gas pressure equals said first pressure; and
   introducing the gas at said first pressure into said storage chamber.

**Revendications**

1. Procédé pour produire un produit moulé par injection, comprenant : le stockage d'une quantité de gaz dans une chambre de stockage sous une première pression; l'introduction d'un courant de matière plastique (8), sous une deuxième pression, dans l'espace de moulage (11), ladite première pression étant au moins égale à ladite seconde pression; l'introduction du gaz dans le courant fondu de matière plastique, de manière à former une cavité de gaz (21) dans le matériau moulé, le gaz exerçant une pression sur la matière plastique environnante, pour presser le matériau vers une surface de l'espace de moulage; la continuation de l'introduction à la fois de gaz et de matériau moulé dans ledit espace de moulage; l'arrêt de l'alimentation en gaz et en matériau plastique moulé; et la solidification du matériau plastique moulé dans l'espace de moulage pour former le produit, caractérisé en ce que le procédé comprend les étapes de :

   réduction de la pression de gaz à une troisième pression, inférieure aux première et deuxième pressions; et

   maintien de la troisième pression à l'intérieur de ladite cavité pendant le refroidissement du matériau plastique.

**2.** Procédé selon la revendication 1, caractérisé en ce que la quantité de gaz introduite dans ledit espace de moulage n'est pas mesurée.

**3.** Procédé selon la revendication 1 ou 2, caractérisé en ce que la pression du gaz introduit dans ledit espace de moulage est sensiblement maintenue à ladite première pression, avant l'arrêt de l'alimentation en gaz.

**4.** Procédé selon l'une quelconque des revendications 1 à 3, caractérisé en ce que le gaz pressurisé est introduit dans le courant fondu de matière plastique, après que l'espace de moulage ait été occupé de plus de la moitié par du matériau plastique fondu.

**5.** Procédé selon l'une quelconque des revendications 1 à 4, caractérisé en ce que ladite première pression est située entre $2{,}758 \times 10^7$ $N.m^{-2}$ et $1{,}034 \times 10^8$ $N.m^{-2}$ (4.000 psi et 15.000 psi).

**6.** Procédé selon l'une quelconque des revendications 1 à 5, caractérisé en ce que le gaz situé dans ladite chambre de stockage est maintenu à ladite première pression, lorsque le gaz à ladite première pression est introduit dans le courant fondu de matériau plastique, au moyen d'une introduction additionnelle de gaz à ladite première pression dans la chambre de stockage.

**7.** Procédé selon l'une quelconque des revendications précédentes, caractérisé en ce que le gaz est introduit à une carotte de masselottage du moule.

**8.** Procédé selon la revendication 1 ou 2, caractérisé en ce que le gaz est de l'azote.

**9.** Procédé selon l'une quelconque des revendications 1 à 4, comprenant les étapes de stockage d'une quantité de gaz dans une chambre de stockage (28), avant que le gaz soit introduit dans le courant fondu de matière plastique, et le ravitaillement en gaz de la chambre de stockage; ladite étape de ravitaillement comprenant les étapes de :

introduction du gaz à une pression inférieure à la seconde pression dans une pompe (35);

augmentation de la pression du gaz au moyen de ladite pompe, jusqu'à ce que la pression de gaz soit égale à ladite première pression; et

introduction du gaz à ladite première pression dans ladite chambre de stockage.

**Patentansprüche**

**1.** Verfahren zum Herstellen von spritzgegossenen Gegenständen, das umfaßt: Speichern einer Gasmenge in einer Speicherkammer bei einem ersten Druck; Einbringen eines Flusses von Kunststoffmaterial (8) in den Formhohlraum (11) bei einem zweiten Druck, wobei der erste Druck wenigstens so hoch ist wie der zweite Druck; Einbringen des Gases in den geschmolzenen Fluß von Kunststoffmaterial, wodurch ein Gashohlraum (21) in dem geschmolzenen Material gebildet wird, und wobei das Gas einen Druck auf das umgebende Kunststoffmaterial ausübt, um das Material gegen die Oberfläche des Formhohlraums zu pressen; Fortsetzen des Einbringens von sowohl Gas als auch geschmolzenem Material in den Formhohlraum; Beenden der Gaszufuhr und der Zufuhr von geschmolzenem Kunststoffmaterial und Verfestigen des geschmolzenen Kunststoffmaterials in dem Formhohlraum, um den Gegenstand zu bilden, dadurch gekennzeichnet, daß das Verfahren die Schritte umfaßt:

Vermindern des Gasdrucks auf einen dritten Druck, der niedriger als der erste und der zweite Druck ist und

Aufrechterhalten des dritten Drucks innerhalb des Formhohlraums während des Abkühlens des Kunststoffmaterials.

**2.** Verfahren gemäß Anspruch 1, dadurch gekennzeichnet, daß die in den Formhohlraum eingeführte Gasmenge nicht gemessen wird.

**3.** Verfahren nach Anspruch 1 oder 2, dadurch gekennzeichnet, daß der Druck des in den Formhohlraum eingebrachten Gases beim ersten Druck im wesentlichen gehalten wird, bevor die Gaszufuhr beendet wird.

**4.** Verfahren gemäß irgendeinem der Ansprüche 1 bis 3, dadurch gekennzeichnet, daß das Druckgas in den geschmolzenen Fluß von Plastikmaterial eingebracht wird, nachdem der Formhohlraum mehr als halb mit geschmolzenem Kunststoffmaterial gefüllt ist.

**5.** Verfahren nach irgendeinem der Ansprüche 1 bis 4, dadurch gekennzeichnet, daß der erste Druck zwischen $2.785 \times 10^7$ $Nm^{-2}$ und $1.034 \times 10^8$ $Nm^{-2}$ (4.000 psi und 15.000 psi) liegt.

6. Verfahren gemäß irgendeinem der Ansprüche 1 bis 5, dadurch gekennzeichnet, daß das Gas in der Speicherkammer auf dem ersten Druck gehalten wird, wenn Gas mit dem ersten Druck in den geschmolzenen Fluß von Kunststoffmaterial eingebracht wird, indem zusätzliches Gas mit dem ersten Druck in die Speicherkammer eingeführt wird.

7. Verfahren nach irgendeinem der vorangehenden Ansprüche, dadurch gekennzeichnet, daß das Gas in den Anguß eingebracht wird.

8. Verfahren nach Anspruch 1 oder 2, dadurch gekennzeichnet, daß das Gas Stickstoff ist.

9. Verfahren nach irgendeinem der Ansprüche 1 bis 4, mit dem zusätzlichen Schritt: Speichern einer Gasmenge in einer Speicherkammer (28) bevor das Gas in den geschmolzenen Fluß von Kunststoffmaterial eingebracht wird und Ergänzen des Gases in der Speicherkammer, wobei der Schritt des Ergänzens die folgende Schritte umfaßt:

Einbringen von Gas mit einem geringeren als dem zweiten Druck in eine Pumpe (35),

Erhöhen des Gasdrucks mit Hilfe der Pumpe bis der Gasdruck gleich dem ersten Druck und

Einbringen des Gases mit dem ersten Druck in die Speicherkammer.

EP 0 250 080 B1

FIG.I

FIG.2